# FASCICULE DE BREVET EUROPEEN

(11) **EP 3 422 232 B1**
(45) Date de publication et mention de la délivrance du brevet: **05.05.2021**
(21) Numéro de dépôt: 18180002.0
(22) Date de dépôt: 27.06.2018
(51) Int. Cl.: G06F 21/52, G06F 21/54

(54) **PROCÉDÉ DE PROTECTION D'UN DISPOSITIF ÉLECTRONIQUE EXÉCUTANT UN PROGRAMME CONTRE DES ATTAQUES PAR INJECTION DE FAUTE**
SCHUTZVERFAHREN EINER ELEKTRONISCHEN VORRICHTUNG, DIE EIN PROGRAMM GEGEN ANGRIFFE DURCH FEHLERINJEKTION AUSFÜHRT
METHOD FOR PROTECTING AN ELECTRONIC DEVICE RUNNING A PROGRAM AGAINST FAULT-INJECTION ATTACKS

(30) Priorité: 27.06.2017 FR 1755892
(43) Date de publication de la demande: 02.01.2019
(73) Titulaire: Idemia Identity & Security France, 92400 Courbevoie (FR)
(72) Inventeur: BRUGNON, Marc, 92445 Issy-Les-Moulineaux (FR); BENCHETTRIT, Michel, 92445 Issy-Les-Moulineaux (FR); BAILLY, Alexis, 92130 Issy-Les-Moulineaux (FR); BENHAMMAM, Aldelghani, 92445 Issy-Les-Moulineaux (FR)
(74) Mandataire: Regimbeau

(56) Documents cités:
- EP-A1- 1 881 404
- WO-A1-2007/068706

## Description

### DOMAINE TECHNIQUE GENERAL

L'invention concerne les logiciels et environnements d'exécution embarqués dans un dispositif électronique et concerne, en particulier, un procédé pour protéger l'exécution d'une application compilée en langage intermédiaire contre des attaques par injection de faute, lors de son exécution sur un dispositif électronique muni d'une machine virtuelle.

### ETAT DE LA TECHNIQUE

L'exécution d'un code Java (et les données manipulées par ce dernier) est sujette à des attaques par injection de fautes.

De façon connue, une attaque par injection de faute consiste à perturber l'environnement physique d'un dispositif électronique qui exécute un programme, de sorte à modifier la valeur mémorisée par le dispositif d'une variable destinée à être utilisée par le programme. De telles perturbations peuvent être produites de différentes manières : variation d'une tension d'alimentation, variation d'une fréquence d'horloge du dispositif, émission de rayonnement électromagnétique ou laser, etc.

Afin de protéger les données notamment dites sensibles, il convient de les protéger en intégrité au niveau de l'application et non pas systématiquement au moment de l'exécution ce qui est consommateur de mémoire et non souhaitable compte tenu de la mémoire souvent limitée.

Aussi, de façon classique, pour une machine virtuelle donnée, les développeurs d'applications doivent suivre un certain nombre de recommandations relatives à la protection des données au niveau de l'application (Guide de développement, règles sécuritaires).

Toutefois, sur un dispositif électronique des applications dites « génériques » peuvent être chargées sur le dispositif électronique. On entend par « application générique » toute application dont le niveau de sécurité est indéterminé et indéterminable, par exemple car le code source est inaccessible. Ces applications sont génériques en ce que les développeurs n'ont pas nécessairement suivi les recommandations précitées. En outre, ces applications génériques sont telles que le code source est généralement développé par un tiers, et il est inconnu, indisponible et typiquement sous forme de code binarisé et dont on ne connait pas le niveau de sécurité

EP 1 881 404 décrit un mécanisme de protection de l'exécution d'une application sur une machine virtuelle via une fonction d'intégrité.

WO 2007/068706 décrit un mécanisme de sécurisation en utilisant une pile de contrôle supplémentaire, le mode sécurisé est activé suivant la détection d'une condition particulière.

### PRESENTATION DE L'INVENTION

Un but de l'invention est de protéger l'exécution d'applications contre des attaques par injection de faute.

A cet effet, l'invention propose un procédé de protection d'un dispositif électronique, exécutant une application par l'intermédiaire d'une machine virtuelle, contre des attaques par injection de faute, l'exécution de l'application mettant en oeuvre une un pool de mémoire volatile dans lequel des variables utilisées par l'application sont lues et/ou mémorisées, le dispositif électronique comprenant une mémoire non volatile dans laquelle est stockée une pluralité d'applications, le procédé comprenant les étapes suivantes :
- détermination d'au moins une application dite générique parmi les applications stockées, comprenant la lecture d'une valeur d'entête d'un package de la mémoire non volatile (8) contenant ladite application générique, la valeur d'entête permettant de discriminer ladite application générique par rapport à au moins une application sécurisée parmi les applications stockées;
- application d'un mode d'exécution sécurisé sur ladite application générique, comprenant une sécurisation des variables lue(s)/mémorisée(s) dans le pool de mémoire volatile.

L'invention est avantageusement complétée par les caractéristiques suivantes, prises seules ou en une quelconque de leur combinaison techniquement possible :
- la sécurisation des variables comprend, lorsqu'une variable doit être mémorisée dans le pool de mémoire volatile, les étapes suivantes : calcul d'une fonction d'intégrité de la variable à mémoriser ; mémorisation de ladite variable dans le pool de mémoire volatile, et mémorisation de la fonction d'intégrité associée dans le même pool de mémoire volatile;
- la sécurisation des variables comprend, lorsqu'une variable doit être lue dans le pool de mémoire volatile, les étapes suivantes : lecture d'une variable et de la fonction d'intégrité correspondante ; calcul d'une fonction d'intégrité de la variable lue selon la fonction d'intégrité utilisée à la mémorisation de la variable lue ; comparaison de la fonction d'intégrité lue à la fonction d'intégrité ainsi calculée ; signalement ou non d'une erreur en fonction du résultat de la comparaison ;
- le procédé comprend un stockage dans la mémoire non volatile d'une pluralité d'applications ;
- la fonction d'intégrité est : la fonction identité, une fonction de hachage, une fonction générant un code de redondance longitudinal, une fonction générant un code de redondance cyclique ;
- le dispositif électronique est une carte à puce comprenant une mémoire non volatile dans laquelle est stockée une machine virtuelle.

L'invention concerne également une machine virtuelle d'exécution d'une application compilée en code intermédiaire sur un dispositif électronique, ladite machine virtuelle étant stockée dans une mémoire non volatile du dispositif électronique et est configurée pour mettre en oeuvre un procédé selon l'invention.

Et l'invention concerne également un dispositif électronique, tel qu'une carte à puce, comprenant une mémoire non volatile dans laquelle est stockée la machine virtuelle selon l'invention.

L'invention permet d'avoir un comportement dynamique de la machine virtuelle en fonction du type d'applications. En outre, l'invention évite d'avoir à sécuriser le contenu complet de la mémoire volatile ce qui limite la consommation de mémoire supplémentaire nécessaire à la sécurisation. L'invention a donc un impact léger sur les performances du dispositif électronique.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1 illustre schématiquement un dispositif électronique selon un mode de réalisation de l'invention ;
- la figure 2 illustre schématiquement une mémoire volatile et une mémoire non volatile d'un dispositif électronique selon l'invention ;
- les figures 3 à 5 illustrent des organigrammes d'étapes d'un procédé selon un mode de réalisation de l'invention.

### DESCRIPTION DETAILLEE DE L'INVENTION

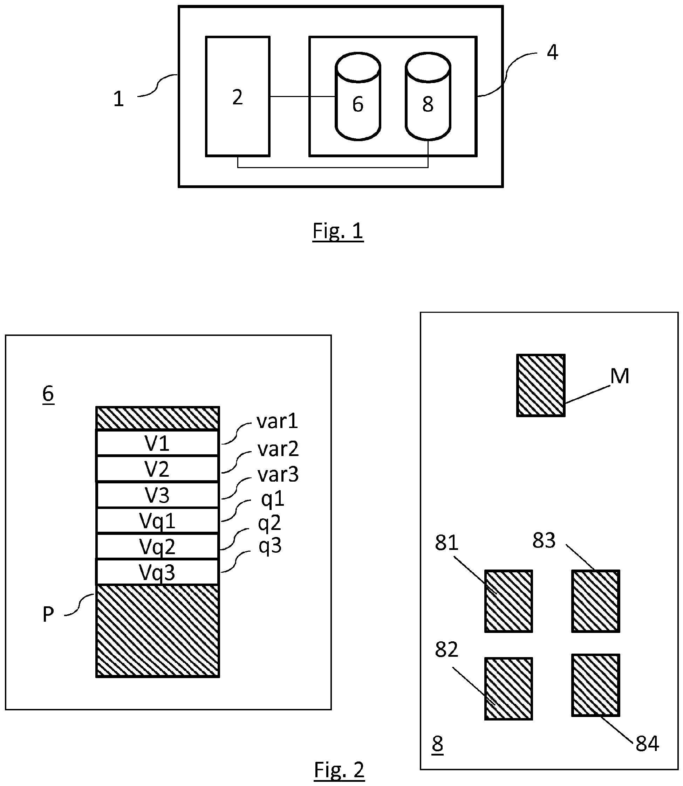

En référence à la **figure 1****,** un dispositif électronique 1 comprend au moins un processeur 2 et au moins une mémoire 4.

La mémoire 4 comprend au moins une mémoire volatile 6, par exemple de type RAM. La mémoire volatile 6 a pour fonction de mémoriser temporairement des données, par exemple des données calculées par le processeur 2. Le contenu de la mémoire volatile 6 est effacé lors d'une mise hors tension du dispositif électronique 1.

La mémoire 4 comprend en outre au moins une mémoire 8 non volatile, par exemple de type disque dur, SSD, flash, EEPROM, etc. La mémoire 8 non volatile a pour fonction de mémoriser des données de manière persistante, au sens où une mise hors tension du dispositif électronique 1 n'efface pas le contenu de la mémoire 8 non volatile.

Le processeur 2 est adapté pour exécuter des instructions de code de programmes appartenant à un jeu d'instructions prédéterminé.

Par extension, le processeur 2 est adapté pour exécuter des programmes se présentant sous la forme d'un binaire compilé comprenant des instructions de codes appartenant à ce jeu d'instructions prédéterminé. On prendra l'exemple dans la suite des programmes de type machine virtuelle.

La machine virtuelle est configurée pour interpréter des programmes ou applications, les programmes se présentant sous la forme d'un binaire comprenant des instructions de code dans un format différent du jeu d'instruction précité, lorsque la machine virtuelle est exécutée par le processeur 2.

Par exemple, une machine virtuelle JavaCard est configurée pour interpréter un « *bytecode* » issu d'un code source dans le langage de programmation JavaCard, qui est un langage de programmation orienté objet.

En relation avec la **figure 2****,** la machine virtuelle M est mémorisée dans la mémoire non volatile 8, de même que des applications 81, 82, 83, 84 destinées à être exécutées par la machine virtuelle M.

Le dispositif électronique 1 est par exemple une carte à puce, telle qu'une carte SIM.

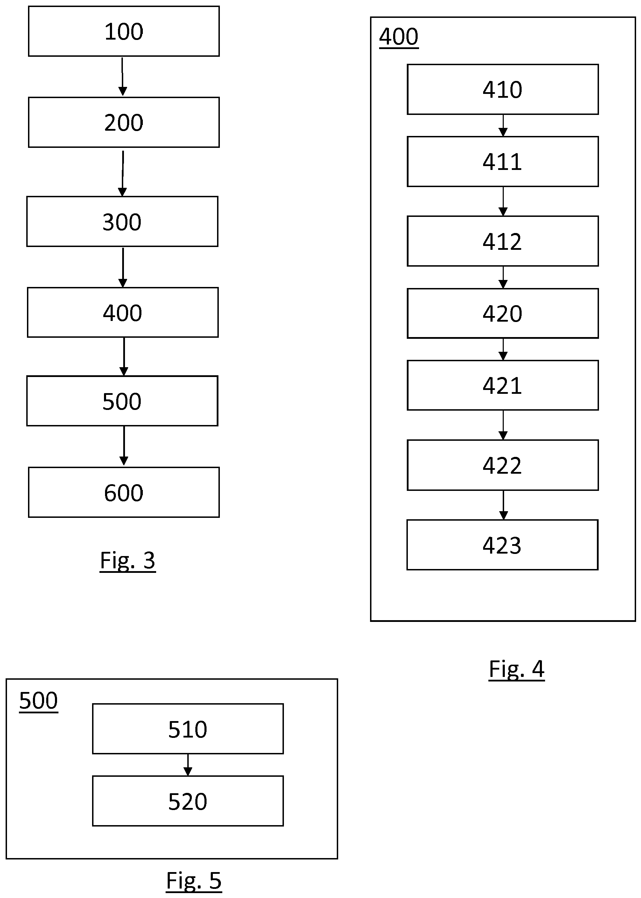

En relation avec les **figures 3** à **5****,** un procédé de protection du dispositif électrique 1 contre des attaques par injection de faute comprend les étapes suivantes.

Dans une étape préliminaire 100, des applications 81, 82, 83, 84 sont stockées à divers emplacements de la mémoire 8 non volatile. La machine virtuelle M a connaissance des adresses de stockage des différentes applications.

Le processeur 2 démarre 200 l'exécution de la machine virtuelle M, par exemple lors d'une mise sous tension du dispositif électronique 1.

Dans une phase d'initialisation 300, la machine virtuelle M détermine parmi les applications 81, 82, 83, 84 stockées dans la mémoire non volatile 8, lesquelles sont dites génériques c'est-à-dire en ce qu'elles n'ont pas été sécurisées directement au niveau de l'application elle-même selon des recommandations spécifiques. Cette discrimination (applet sécurisée ou non) est indiquée au niveau du package (entête). Le package est le container dans lequel se trouve l'applet. De manière plus générale ici il s'agit de sélectionner un certain nombre d'applications parmi celles stockées dans la mémoire non volatile.

Puis, la machine virtuelle exécute 400 selon un mode d'exécution dit sécurisé au moins une de ces applications génériques. A noter que pour les applications qui ne sont pas génériques on a un mode d'exécution dit nominal. En fonction du type d'application à exécuter la machine virtuelle mettra en oeuvre soit le mode d'exécution nominal soit le mode d'exécution sécurisé.

Quel que ce soit le mode d'exécution, la machine virtuelle M alloue 500 dans la mémoire volatile 6, une pile d'exécution P associée à une application.

Cette pile d'exécution P a pour vocation à contenir des variables dont le processus de l'application a besoin au cours de son exécution.

La pile d'exécution P est définie par une adresse de pile dans la mémoire volatile 6, une taille, et une taille de mot adressable dans la pile d'exécution P.

L'adresse de pile AP est une adresse de début de la pile d'exécution P, ou bien une adresse de fin de la pile d'exécution P.

On précise ici que l'on entend par pile d'exécution P ou tas (en anglais « pool ») de mémoire volatile une zone de mémoire volatile réservée à la gestion des variables Java transitoires (en anglais « transient ») au sens de la spécification « Java Card 3 Platform Runtime Environment Spécification , Classic Edition Version3.0.4 September 2011, tel que défini en son chapitre 5.

Une telle pile d'exécution P se distingue d'une pile Java classique selon laquelle des opérandes, variables locales, adresses retour des méthodes Java sont gérées. Au contraire, la pile d'exécution P gère des variables de nature différente telles que des tableaux ou des tampons (en anglais « buffer »).

Au cours de l'exécution 400 du programme par la machine virtuelle M, cette dernière commande la mémorisation 410 ou la lecture 420 de plusieurs variables var1, var2, var3 dans la mémoire volatile 6. Chaque variable a une valeur V1, V2, V3. Sur la figure 3 trois variables sont représentées à titre d'exemple.

Le mode d'exécution sécurisé se distingue du mode nominal comme suit.

A la mémorisation 410, une fonction d'intégrité de la variable à mémoriser est calculée 411 ayant pour résultat une donnée d'intégrité qui est mémorisée 412 avec la variable dans la mémoire volatile.

La donnée d'intégrité peut être mémorisée directement à la suite de la variable ou bien à une adresse différente (comme cela est illustré sur la figure 3 où q1, q2, q3 sont les données d'intégrité ayant pour valeur Vq1, Vq2, Vq3 des variables var1, var2, var3).

A la lecture 420, outre la variable lue 421, sa donnée d'intégrité est également lue 422. Puis, on calcule 423 alors une fonction d'intégrité de la variable lue ayant pour résultat une donnée d'intégrité de contrôle. Ensuite, on compare 424 la donnée d'intégrité lue à la donnée d'intégrité de contrôle qui vient d'être calculée. Bien entendu, la fonction d'intégrité est identique à celle mise en œuvre à la mémorisation de la variable considérée.

La fonction d'intégrité peut être : la fonction identité, une fonction de hachage, une fonction générant un code de redondance longitudinal (« *longitudinal redundancy check* » ou LRC en anglais), une fonction générant un code de redondance cyclique (« *cyclic redundancy check* » ou CRC en anglais), etc.

En fonction du résultat de la comparaison, une erreur est éventuellement signalée 500.

En particulier, lorsque la donnée d'intégrité lue et la donnée d'intégrité de contrôle sont différentes, une erreur est signalée (étape 510) par la machine virtuelle M. Dans ce cas, on peut considérer qu'une attaque a été effectuée à l'encontre de la mémoire volatile.

A contrario, lorsque la donnée d'intégrité lue et la donnée d'intégrité de contrôle sont identiques on ne signale pas (étape 520) d'erreur.

Lorsque l'étape de signalement d'erreur est mise en œuvre, diverses mesures peuvent être prises : par exemple un arrêt de l'exécution de l'application, ou bien une mesure plus radicale, par exemple un arrêt du dispositif électronique. De manière alternative, on peut décider de l'arrêt de l'application ou bien du dispositif électronique 1 après un certain nombre de signalement.

Lorsqu'il n'est pas pris de décision d'arrêter l'exécution de l'application, la machine virtuelle M poursuit l'exécution de l'application.

## Revendications

1. Procédé de protection d'un dispositif électronique (1), exécutant une application par l'intermédiaire d'une machine (M) virtuelle, contre des attaques par injection de faute, l'exécution de l'application mettant en œuvre un pool de mémoire volatile (P) dans lequel des variables (var1, var2, var3) utilisées par l'application sont lues et/ou mémorisées,
le dispositif électronique comprenant une mémoire non volatile dans laquelle est stockée une pluralité d'applications, le procédé comprenant les étapes suivantes :
- détermination (300) d'au moins une application dite générique parmi les applications stockées, comprenant la lecture d'une valeur d'entête d'un package de la mémoire non volatile (8) contenant ladite application générique, la valeur d'entête permettant de discriminer ladite application générique par rapport à au moins une application sécurisée parmi les applications stockées ;
- application (400) d'un mode d'exécution sécurisé sur ladite application générique, comprenant une sécurisation des variables lue(s)/mémorisée(s) dans le pool de mémoire volatile (P).

2. Procédé selon la revendication 1, dans lequel une application dite générique est une application dont le niveau de sécurité est indéterminé et indéterminable.

3. Procédé selon l'une des revendications précédentes, dans lequel la sécurisation des variables comprend, lorsqu'une variable doit être mémorisée dans le pool de mémoire volatile (P), les étapes suivantes :
- calcul d'une fonction d'intégrité (Vq1) de la variable à mémoriser (V1) ;
- mémorisation de ladite variable (V1) dans le pool de mémoire volatile (P), et mémorisation de la fonction d'intégrité (Vq1) associée dans le même pool de mémoire volatile (P).

4. Procédé selon la revendication 3, dans lequel la sécurisation des variables comprend, lorsqu'une variable doit être lue dans le pool de mémoire volatile, les étapes suivantes :
- lecture d'une variable et de la fonction d'intégrité correspondante ;
- calcul d'une fonction d'intégrité de la variable lue selon la fonction d'intégrité utilisée à la mémorisation de la variable lue ;
- comparaison de la fonction d'intégrité lue à la fonction d'intégrité ainsi calculée ;
- signalement ou non d'une erreur en fonction du résultat de la comparaison.

5. Procédé selon l'une quelconque des revendications précédentes, comprenant un stockage dans la mémoire non volatile d'une pluralité d'applications.

6. Procédé selon l'une quelconque des revendications 3 à 5, dans lequel la fonction d'intégrité est : la fonction identité, une fonction de hachage, une fonction générant un code de redondance longitudinal, une fonction générant un code de redondance cyclique.

7. Procédé selon l'une quelconque des revendications précédentes, dans lequel le dispositif électronique est une carte à puce comprenant une mémoire (8) non volatile dans laquelle est stockée une machine virtuelle.

8. Machine virtuelle d'exécution d'une application compilée en code intermédiaire sur un dispositif électronique, ladite machine virtuelle étant stockée dans une mémoire non volatile (8) du dispositif électronique et est configurée pour mettre en œuvre un procédé selon l'une des revendications précédentes.

9. Dispositif électronique, tel qu'une carte à puce, comprenant une mémoire (8) non volatile dans laquelle est stockée la machine virtuelle selon la revendication précédente.

## Patentansprüche

1. Verfahren zum Schutz einer elektronischen Vorrichtung (1), die eine Anwendung über eine virtuelle Maschine (M) ausführt, gegen Angriffe durch Fehlerinjektion, wobei bei der Ausführung der Anwendung ein Pool des volatilen Speichers (P) umgesetzt wird, in dem von der Anwendung verwendeten Variablen (var1, var2, var3) gelesen und/oder gespeichert werden,
wobei die elektronische Vorrichtung einen nicht volatilen Speicher umfasst, in dem eine Vielzahl von Anwendungen gespeichert ist, wobei das Verfahren die folgenden Schritte umfasst:
- Bestimmen (300) von mindestens einer generischen Anwendung von den gespeicherten Anwendungen, umfassend das Lesen eines Headerwerts eines Pakets des nicht volatilen Speichers (8), der die generische Anwendung enthält, wobei der Headerwert erlaubt, die generische Anwendung in Bezug auf mindestens eine gesicherte Anwendung von den gespeicherten Anwendungen zu diskriminieren;
- Anwenden (400) eines gesicherten Ausführungsmodus auf die generische Anwendung, umfassend eine Sicherung der gelesenen/gespeicherten Variable(n) im Pool des volatilen Speichers (P).

2. Verfahren nach Anspruch 1, wobei eine generische Anwendung eine Anwendung ist, deren Sicherheitsniveau unbestimmt und unbestimmbar ist.

3. Verfahren nach einem der vorangehenden Ansprüche, wobei die Sicherung der Variablen, wenn eine Variable im Pool des volatilen Speichers (P) gespeichert werden muss, die folgenden Schritte umfasst:
- Berechnen einer Integritätsfunktion (Vql) der zu speichernden Variablen (V1);
- Speichern der Variablen (V1) im Pool des volatilen Speichers (P) und Speichern der zugeordneten Integritätsfunktion (Vql) im selben Pool des volatilen Speichers (P).

4. Verfahren nach Anspruch 3, wobei die Sicherung der Variablen, wenn eine Variable im Pool des volatilen Speichers gelesen werden muss, die folgenden Schritte umfasst:
- Lesen einer Variablen und der entsprechenden Integritätsfunktion;
- Berechnen einer Integritätsfunktion der gelesenen Variablen gemäß der beim Speichern der gelesenen Variablen verwendeten Integritätsfunktion;
- Vergleichen der gelesenen Integritätsfunktion mit der derart berechneten Integritätsfunktion;
- Signalisieren eines Fehlers in Abhängigkeit vom Ergebnis des Vergleichs, oder nicht.

5. Verfahren nach einem der vorangehenden Ansprüche, umfassend ein Speichern einer Vielzahl von Anwendungen im nicht volatilen Speicher.

6. Verfahren nach einem der Ansprüche 3 bis 5, wobei die Integritätsfunktion ist: die Identitätsfunktion, eine Hash-Funktion, eine Funktion, die einen longitudinalen Redundanzcode generiert, eine Funktion, die einen zyklischen Redundanzcode generiert.

7. Verfahren nach einem der vorangehenden Ansprüche, wobei die elektronische Vorrichtung eine Chipkarte ist, die einen nicht volatilen Speicher (8) umfasst, in dem eine virtuelle Maschine gespeichert ist.

8. Virtuelle Maschine zur Ausführung einer kompilierten Anwendung in Zwischencode auf einer elektronischen Vorrichtung, wobei die virtuelle Maschine in einem nicht volatilen Speicher (8) der elektronischen Vorrichtung gespeichert ist und für die Umsetzung eines Verfahrens nach einem der vorangehenden Ansprüche ausgelegt ist.

9. Elektronischen Vorrichtung wie eine Chipkarte, umfassend einen nicht volatilen Speicher (8), in dem die virtuelle Maschine nach vorangehendem Anspruch gespeichert ist.

## Claims

1. A method for protecting an electronic device (1), executing an application via a virtual machine (M), against fault injection attacks, the execution of the application implementing a volatile memory pool (P) in which variables (var1, var2, var3) used by the application are read and/or stored,
the electronic device comprising a non-volatile memory in which a plurality of applications is stored, the method comprising the following steps:
- determining (300) at least one application called generic application among the stored applications, comprising the reading of a header value of a package of the non-volatile memory (8) containing said generic application, the header value making it possible to discriminate said generic application relative to at least one secure application among the stored applications;
- applying (400) a secure execution mode on said generic application, comprising a securing of the variables read/stored in the volatile memory pool (P).

2. The method according to claim 1, wherein an application called generic application is an application whose level of security is indeterminate and indeterminable.

3. The method according to any of the preceding claims, wherein the securing of the variables comprises, when a variable must be stored in the volatile memory pool (P), the following steps:
- calculating an integrity function (Vql) of the variable to be stored (V1);
- storing said variable (V1) in the volatile memory pool (P), and storing the associated integrity function (Vql) in the same volatile memory pool (P).

4. The method according to claim 3, wherein the securing of the variables comprises, when a variable must be read in the volatile memory pool, the following steps:
- reading a variable and the corresponding integrity function;
- calculating an integrity function of the read variable according to the integrity function used in the storage of the read variable;
- comparing the read integrity function with the thus calculated integrity function;
- reporting or not an error according to the result of the comparison.

5. The method according to any one of the preceding claims, comprising storage in the non-volatile memory of a plurality of applications.

6. The method according to any one of claims 3 to 5, wherein the integrity function is: the identity function, a hash function, a function generating a longitudinal redundancy check, a function generating a cyclic redundancy check.

7. The method according to any one of the preceding claims, wherein the electronic device is a smart card comprising a non-volatile memory (8) in which a virtual machine is stored.

8. A virtual machine for executing an application compiled in intermediate code on an electronic device, said virtual machine being stored in a non-volatile memory (8) of the electronic device and is configured to implement a method according to any of the preceding claims.

9. An electronic device, such as a smart card, comprising a non-volatile memory (8) in which the virtual machine according to the preceding claim is stored.
